# FASCICULE DE BREVET EUROPEEN

(11) **EP 3 214 582 B1**
(45) Date de publication et mention de la délivrance du brevet: **12.02.2020**
(21) Numéro de dépôt: 16181366.2
(22) Date de dépôt: 27.07.2016
(51) Int. Cl.: G06K 19/07

(54) **SÉLECTION D'APPLICATION DANS UN TERMINAL MOBILE**
AUSWAHL VON APPS IN EINEM MOBILEN ENDGERÄT
APPLICATION SELECTION IN A MOBILE TERMINAL

(30) Priorité: 01.03.2016 FR 1651711
(43) Date de publication de la demande: 06.09.2017
(73) Titulaire: PROTON WORLD INTERNATIONAL N.V., 1831 Diegem (BE)
(72) Inventeur: VAN NIEUWENHUYZE, Olivier, 1970 Wezembeek-Oppem (BE); CUYPERS, Frank, 9000 De Pinte (BE); DUMOULIN, Patrick, 1170 Bruxelles (BE)
(74) Mandataire: Cabinet Beaumont

(56) Documents cités:
- WO-A1-2006/110000
- WO-A1-2008/153996
- CN-A- 104 392 192

## Description

### Domaine

La présente description concerne de façon générale les circuits électroniques et, plus particulièrement, les circuits de communication sans contact. La présente description vise plus particulièrement la sélection d'un mode de communication entre un terminal de communication sans contact et un circuit de communication sans contact.

### Exposé de l'art antérieur

Le développement des applications utilisables dans des communications sans contact, entre un dispositif de couplage en champ proche (Proximity Coupling Device - PCD), par exemple un terminal sans contact (Contactless Reader), et un circuit intégré sans contact (Proximity Integrated Circuit - PIC) ou une carte à circuit intégré sans contact (Proximity Integrated Circuit Card - PICC), engendre de nouvelles difficultés.

En particulier, les communications répondent à des normes qui évoluent et qui sont susceptibles de poser des problèmes de compatibilité entre différentes générations des dispositifs ou circuits.

Par ailleurs, les circuits intégrés sans contact, qu'ils soient inclus dans une carte à microcircuit, dans un téléphone mobile ou tout autre dispositif portable, sont de plus en plus souvent capables d'héberger plusieurs applications ayant des niveaux de sécurité différents. Par exemple, une carte à microcircuit peut héberger une application bancaire, par exemple selon la norme EMV (Eurocard-Mastercard-Visa), et d'autres applications dites propriétaires, par exemple de contrôle d'accès, de transport, etc.

Ces différentes applications peuvent requérir des protocoles différents. Les systèmes usuels se basent sur une détection, par le lecteur, de la capacité de la carte à communiquer selon une norme ou une autre. Toutefois, cela engendre des faux-rejets, c'est-à-dire qu'une carte qui aurait la capacité de communiquer avec un lecteur est refusée par celui-ci.

Le document CN 104 392 192 A divulgue un procédé de configuration d'un circuit de communication sans contact hébergeant plusieurs applications compatibles avec des protocoles de communication différents et établissant une transaction avec un lecteur en prenant successivement différentes valeurs d'identifiant en fonction du module d'application et donc du protocole utilisé.

Le document WO 2008/153996 A1 divulgue un circuit de communication sans contact comportant plusieurs modules d'applications fonctionnant avec des protocoles différents. La sélection du protocole utilisé pour la transaction est faite par le lecteur en se basant sur le signal SAK transmis par le circuit.

Le document WO 2006/110000 A1 divulgue un circuit de communication sans contact comportant plusieurs modules fonctionnant avec des protocoles différents ainsi qu'une unité de sélection de module permettant de sélectionner le module communiquant avec le terminal de lecture lors d'une transaction. Cette sélection est faite en se basant sur les messages d'erreur envoyé par les modules lorsque le protocole utilisé dans le signal de requête du lecteur est / n'est pas reconnu par le module.

### Résumé

Il serait souhaitable de disposer d'une solution pour vérifier la compatibilité d'un circuit intégré sans contact à communiquer avec un dispositif de couplage en champ proche.

Il serait souhaitable de disposer d'une solution compatible avec les dispositifs de couplage existants.

Ainsi, un mode de réalisation prévoit un procédé de configuration d'un circuit de communication sans contact hébergeant au moins deux applications compatibles avec des protocoles de communication différents, comportant les étapes de :
initialiser un identifiant d'un protocole de communication à une première valeur ;
en cas d'échec d'une transaction avec un dispositif de couplage en champ proche, incrémenter un compteur ; et
lorsque la valeur du compteur atteint un seuil, changer la valeur de l'identifiant pour une deuxième valeur.

Selon un mode de réalisation, le compteur est réinitialisé à chaque transaction réussie.

Selon un mode de réalisation, l'identifiant est réinitialisé à la première valeur à chaque transaction.

Selon un mode de réalisation, la valeur de l'identifiant conditionne le protocole de communication accepté par le circuit.

Selon un mode de réalisation, le circuit communique selon le protocole ISO 14443-4 avec le premier identifiant et ISO 14443-3 avec le deuxième identifiant.

Selon un mode de réalisation, une première application est une application EMV.

Selon un mode de réalisation, une deuxième application est une application MIFARE Classic ou MIFARE Classic+.

Selon un mode de réalisation, le seuil a une valeur comprise entre 2 et 10.

Un mode de réalisation prévoit un circuit de communication sans contact comportant un microprocesseur programmé pour la mise en oeuvre du procédé ci-dessus.

Un mode de réalisation prévoit une carte à microcircuit comportant un tel circuit.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1 représente, de façon très schématique, un mode de réalisation d'un système de communication en champ proche ;
la figure 2 est un schéma-bloc simplifié d'un exemple usuel de configuration d'un dispositif de couplage en champ proche ;
la figure 3 illustre l'établissement d'une communication en champ proche selon un protocole MIFARE Plus ; et
la figure 4 est un schéma-bloc simplifié d'un mode de réalisation d'un procédé de configuration d'un dispositif de couplage en champ proche.

### Description détaillée

De mêmes éléments ont été désignés par de mêmes références aux différentes figures.

Par souci de clarté, seuls les étapes et éléments utiles à la compréhension des modes de réalisation qui vont être décrits ont été représentés et seront détaillés. En particulier, les échanges entre le dispositif de couplage en champ proche et un circuit intégré sans contact une fois la communication établie n'ont pas été détaillés, les modes de réalisation décrits étant compatibles avec les échanges usuels.

Les modes de réalisation sont décrits en prenant pour exemple une carte sans contact constituant une carte à circuit intégré sans contact (PICC) et un lecteur sans contact constituant un dispositif de couplage en champ proche (PCD). Ils s'appliquent toutefois plus généralement à tout dispositif utilisé en dispositif de couplage en champ proche et à tout circuit intégré de communication sans contact dans lesquels des problèmes similaires se posent. De plus, bien que l'on fasse référence à des applications de paiement, les modes de réalisation décrits se transposent à des applications de nature différente pourvu qu'elles engendrent les mêmes problèmes et soient compatibles avec les solutions décrites.

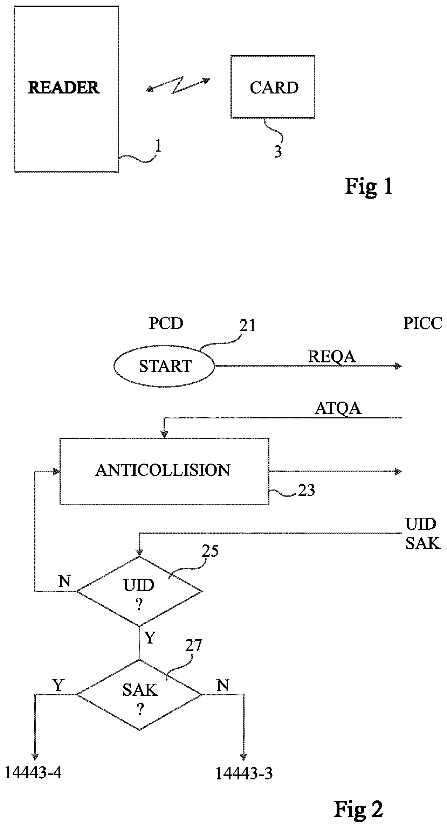

La figure 1 représente, de façon très schématique, un système de communication sans contact du type auquel s'appliquent les modes de réalisation décrits.

Un terminal 1 de communication sans contact ou lecteur sans contact (READER) génère un champ électromagnétique. Une carte 3 (CARD) sans contact se trouvant à portée du lecteur capte ce champ et est alors capable d'échanger des informations avec le lecteur.

Les protocoles de communication sans contact peuvent être "propriétaires", c'est-à-dire, fixés par le fabriquant ou normalisés. En particulier, les cartes bancaires exploitent une technologie, dite EMV, qui utilise des protocoles basés sur la norme ISO 14443-4. Des cartes multi-applications sont cependant susceptibles d'héberger non seulement une application bancaire selon la technologie EMV mais également des applications qui exploitent une technologie connue sous la dénomination MIFARE. La technologie MIFARE utilise, dans certaines réalisations un protocole (applicatif) de communication qui ne supporte pas le protocole ISO 14443-4. L'application qui doit être lancée par la carte dépend du lecteur avec lequel elle communique. En effet, un lecteur est généralement dédié à une application (par exemple, bancaire, de transport, de contrôle d'accès, etc.) et l'activation d'une carte dans le champ du lecteur dépend du protocole que la carte accepte.

La figure 2 est un schéma-bloc illustrant les étapes d'une séquence usuelle d'activation d'une carte dans le champ d'un lecteur.

Le lecteur PCD émet, périodiquement ou lorsqu'il détecte (bloc 21, START) la présence d'une charge dans le champ qu'il génère, une requête (REQA) à destination des cartes potentiellement présentes dans le champ. Si une carte PICC présente dans le champ interprète la requête REQA, elle envoie un message ATQA d'accusé-réception. A réception d'un tel message, le lecteur entame une procédure dite d'anticollision (bloc 23, ANTICOLLISION) pour s'assurer qu'il ne communique qu'avec une seule carte. Cette procédure inclut l'envoi, par la carte, d'un identifiant UID de la carte et d'un code SAK (Select AcKnowledge) identifiant l'application que la carte héberge et avec laquelle elle répond. Le lecteur vérifie si l'identifiant UID est complet (bloc 25, UID ?). Dans la négative (sortie N du bloc 25), la procédure d'anticollision se poursuit jusqu'à réception d'un identifiant complet. Dans l'affirmative (sortie Y du bloc 25), le lecteur lit le code SAK pour déterminer le protocole de communication avec la carte. Typiquement, dans les applications visées par la présente description, le lecteur PCD détermine (bloc 27, SAK ?) si la carte est compatible (sortie Y du bloc 27) avec le protocole 14443-4 ou (sortie N du bloc 27) 14443-3.

Le code SAK ou valeur SAK détermine le protocole de communication accepté par la carte.

L'apparition de cartes multi-applications et notamment hébergeant à la fois une application bancaire de type EMV et une application de type MIFARE Plus engendre des difficultés.

La technologie MIFARE possède différents niveaux de sécurité (Security Level) SL0 à SL3 selon la génération de la carte. Plus particulièrement, une carte MIFARE Classic (mode SL1) ou MIFARE Classic+ (mode SL2) est compatible avec le protocole ISO 14443-3. Une carte MIFARE Plus (SL3) est compatible avec le protocole ISO 14443-4. De plus, les cartes MIFARE Plus évoluées sont retro compatibles. Ainsi, une carte MIFARE Plus peut également fonctionner sous des niveaux de sécurité inférieurs, afin d'être compatible avec des lecteurs existants. De même, un lecteur hébergeant des applications MIFARE Plus est généralement capable de fonctionner selon les protocoles inférieurs (MIFARE Classic ou Classic+).

Afin de tirer profit des avantages des protocoles plus récents et notamment du protocole MIFARE Plus, un lecteur hébergeant une application MIFARE Plus cherche d'abord à établir une communication selon ce protocole. Ainsi, en présence d'une carte dans son champ, il cherche à établir une communication selon le protocole ISO 14443-4. Si la carte répond, c'est qu'elle est compatible avec la technologie MIFARE Plus et la communication commence. Si la carte ne répond pas, le lecteur bascule sur un protocole de niveau inférieur MIFARE Classic et communique selon la norme 14443-3.

Toutefois, en présence d'une carte hébergeant une application EMV et une application MIFARE Classic, la communication ne peut pas s'établir alors que la carte est compatible avec le lecteur. En effet, lors de l'établissement de la communication, la carte répond qu'elle accepte le protocole 14443-4 dans la mesure où elle héberge une application EMV. Le lecteur entame alors la communication en mode MIFARE Plus. Toutefois, la carte ne répond pas car son application MIFARE n'est pas compatible avec la technologie MIFARE Plus. On est alors dans une situation où une carte, qui aurait pu communiquer avec le lecteur en mode MIFARE Classic (ou Classic+), se trouve empêchée de communiquer car elle héberge une application EMV.

En fait, une carte ne reconnaît pas la nature de la transaction (par exemple EMV ou MIFARE Plus) avant qu'elle ne reçoive des commandes spécifiques liées à l'application. Or, un lecteur MIFARE Plus commence par adapter la transaction vers le protocole le plus performant (MIFARE Plus) avant d'envoyer des commandes spécifiques à l'application. Cela se traduit, pour des cartes hébergeant une application EMV et une application MIFARE mais non compatibles avec MIFARE Plus, à un échec de la transaction alors que le lecteur et la carte sont compatibles avec la technologie MIFARE Classic.

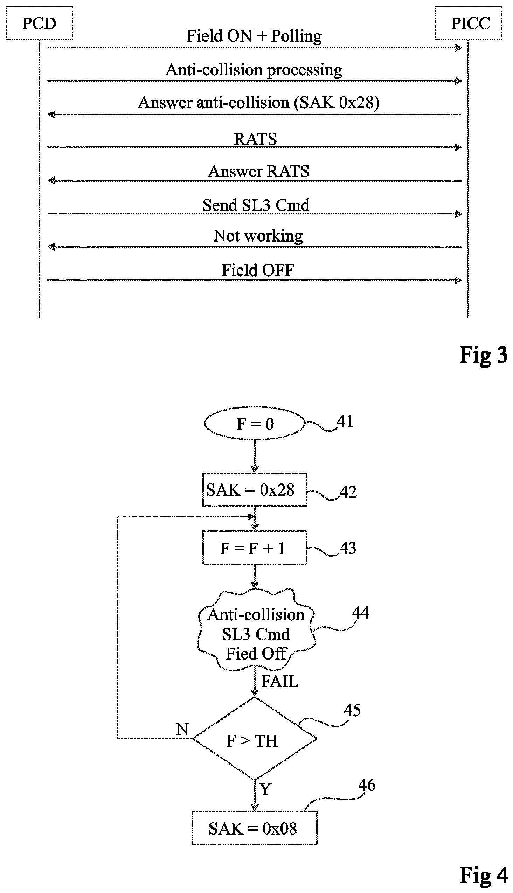

La figure 3 illustre, de façon très schématique, le rejet d'une transaction par un lecteur MIFARE Plus dans une telle situation.

Le lecteur (PCD) allume (FIELD ON) le champ (active la génération du champ) et envoie périodiquement (Polling) une requête (REQA, figure 2). La carte (PICC) répond et un processus d'anticollision (Anticollision processing) débute. Comme la carte est une carte EMV, elle répond (Answer anticollision) avec une valeur SAK compatible avec la norme ISO 14443-4. Pour une carte EMV et MIFARE Classic, la valeur SAK est 0x28. A réception de la réponse, le lecteur envoie une requête normalisée de la norme ISO 14443-4 dite RATS (Request for Answer to Select) permettant de basculer en mode MIFARE Plus si la carte répond ou de rester en mode MIFARE Classic dans le cas contraire. Comme la carte héberge une application EMV, elle répond (Answer RATS) à cette requête de la norme 14443-4. Le lecteur commence alors une transaction MIFARE Plus avec le niveau de sécurité SL3 (Send SL3 Cmd). Toutefois, la carte reste muette (Not working) ou retourne une erreur (par exemple mentionnant une commande inconnue) car son application MIFARE n'est pas compatible avec ce niveau de sécurité. Le lecteur éteint alors le champ (Field OFF).

Alors que les techniques usuelles se basent sur une détection par le lecteur, les inventeurs prévoient d'effectuer une détection côté carte afin de résoudre la situation exposée ci-dessus et de permettre à une carte MIFARE de niveau SL1 ou SL2 de communiquer avec un lecteur MIFARE Plus malgré le fait qu'elle héberge une application EMV.

La figure 4 illustre, de façon très schématique, un mode de réalisation d'un procédé de détection, par une carte, d'une requête d'établissement d'une transaction MIFARE.

Selon ce mode de réalisation, la carte compte le nombre de transactions en échec sous le protocole ISO 14443-4 et, à partir d'un seuil, modifie sa valeur SAK pour une valeur compatible avec la norme ISO 14443-3. Ainsi, cela provoque le basculement d'un lecteur MIFARE Plus vers un mode MIFARE Classic.

Lorsque la carte se trouve dans le champ d'un lecteur communiquant selon le protocole 14443-4, elle initialise un compteur (bloc 41, F=0) du nombre d'échecs de transaction ainsi que sa valeur SAK à la valeur correspondant aux applications qu'elle héberge et à son niveau de sécurité MIFARE. Par exemple, la carte est une carte EMV et MIFARE Classic. Elle initialise alors la valeur SAK à 0x28 (bloc 42, SAK 0x28). Une transaction avec le lecteur débute. La carte incrémente le compteur F (bloc 43, F=F+1). En présence d'un lecteur MIFARE Plus, ce dernier exécute (bloc 44, Anti Collision, SL3 Cmd, Field Off) les étapes illustrées en figure 3. La transaction échoue (FAIL). La carte compare alors la valeur du compteur à un seuil TH (bloc 45, F>TH ?). Tant que ce seuil n'est pas atteint (sortie N du bloc 45), la carte conserve sa valeur SAK et une nouvelle transaction va être tentée par le lecteur. Au bout d'un nombre de transactions échouées correspondant au seuil TH (sortie Y du bloc 45), la carte modifie sa valeur SAK (bloc 46, SAK=0x08) pour qu'elle corresponde à celle d'une carte MIFARE Classic mono application. Ainsi, lors de la transaction suivante, la carte communique cette valeur au lecteur qui ne commute pas en mode 14443-4 mais reste en mode 14443-3 et la transaction peut s'opérer.

On note que le fonctionnement décrit ci-dessus n'est pas préjudiciable au fonctionnement de la carte avec d'autres lecteurs. En effet, si la carte est en face d'un terminal de paiement EMV, ce lecteur envoie une commande EMV en utilisant le protocole 14443-4 et la carte répond. Si la carte est en face d'un terminal MIFARE Classic, ce dernier émet selon le protocole 14443-3 et la sélection de l'application MIFARE côté carte ne pose pas de problème.

Par ailleurs, l'utilisation d'un compteur de transactions en échec présente l'avantage d'éviter un basculement vers un mode inférieur en cas d'échec accidentel d'une transaction (perturbation de la communication par exemple). La valeur du seuil est au moins 2 et, de préférence au plus 10, par exemple de 3 ou 4.

Le compteur F est un compteur en mémoire non volatile afin d'être conservé entre deux transactions. Il doit cependant être réinitialisé, par exemple, lorsqu'une transaction est réussie.

Par ailleurs la valeur SAK de la carte est réinitialisée à sa valeur d'origine ou native (multi applications) soit au bout d'un temps donné, soit quand une transaction est réussie, soit au premier de ces deux événements. La valeur SAK d'une carte est stockée en mémoire non volatile. La mise en oeuvre du mode de réalisation ci-dessus requiert l'utilisation d'un deuxième champ pour stocker la valeur SAK de la transaction. Par exemple, la valeur SAK de transaction est stockée dans un registre de mémoire volatile. Ainsi, ce registre est automatiquement réinitialisé à chaque transaction et la valeur native y est transférée au début de chaque transaction.

La valeur SAK native de la carte (bloc 42) et la valeur vers laquelle elle bascule (bloc 46) dépendent de son niveau de sécurité MIFARE et du type de carte (en particulier de la taille de sa mémoire). Ainsi, une carte EMV et MIFARE Classic prend les valeurs SAK 0x28 et 0x08 pour une carte 2K (2 kilo-octets) et les valeurs 0x38 et 0x18 pour une carte 4K. Une carte EMV et MIFARE Classic+ prend les valeurs SAK 0x30 et 0x10 pour une carte 2K et les valeurs 0x31 et 0x11 pour une carte 4K.

Le mode de réalisation décrit ci-dessus est mis en oeuvre côté carte et est transparent pour le lecteur (ne demande aucune modification côté lecteur). Les cartes ainsi réalisées (programmées) sont donc compatibles avec les lecteurs existants.

Divers modes de réalisation ont été décrits. Diverses variantes et modifications apparaîtront à l'homme de l'art. En particulier, bien que les modes de réalisation aient été décrits en relation avec une carte à microcircuit, ils sont compatibles avec une réalisation dans tout dispositif de communication en champ proche dans lequel des problèmes similaires se posent, par exemple un téléphone mobile équipé d'un routeur NFC opérant en mode carte. Par ailleurs, bien que les modes de réalisation aient été plus particulièrement décrits en relation avec un exemple d'application à des transactions bancaires EMV et MIFARE, ils se transposent à d'autres applications dans lesquelles des problèmes similaires se posent. En outre, la mise en oeuvre pratique des modes de réalisation qui ont été décrits est à la portée de l'homme du métier à partir des indications fonctionnelles données ci-dessus et en utilisant ou programmant des circuits en eux-mêmes usuels. En particulier, un circuit intégré de communication sans contact auquel s'appliquent ces modes de réalisation comporte généralement au moins un microprocesseur, une ou plusieurs unités de mémoire volatile et non volatile, une interface de communication en champ proche et, souvent, d'autres circuits en fonction des applications hébergées.

## Revendications

1. Procédé de configuration d'un circuit de communication sans contact hébergeant au moins deux applications compatibles avec des protocoles de communication différents, comportant les étapes de :
initialiser un identifiant (SAK) d'un protocole de communication à une première valeur ;
en cas d'échec d'une transaction avec un dispositif de couplage en champ proche, incrémenter un compteur (F) ; et
lorsque la valeur du compteur atteint un seuil (TH), changer la valeur de l'identifiant pour une deuxième valeur.

2. Procédé selon la revendication 1, dans lequel le compteur (F) est réinitialisé à chaque transaction réussie.

3. Procédé selon la revendication 1 ou 2, dans lequel l'identifiant est réinitialisé à la première valeur à chaque transaction.

4. Procédé selon l'une quelconque des revendications 1 à 3, dans lequel la valeur de l'identifiant conditionne le protocole de communication accepté par le circuit.

5. Procédé selon la revendication 4, dans lequel le circuit communique selon le protocole ISO 14443-4 avec le premier identifiant et ISO 14443-3 avec le deuxième identifiant.

6. Procédé selon l'une quelconque des revendications 1 à 5, dans lequel une première application est une application EMV.

7. Procédé selon l'une quelconque des revendications 1 à 6, dans lequel une deuxième application est une application MIFARE Classic ou MIFARE Classic+.

8. Procédé selon l'une quelconque des revendications 1 à 7, dans lequel le seuil a une valeur comprise entre 2 et 10.

9. Circuit de communication sans contact comportant un microprocesseur programmé pour la mise en oeuvre du procédé selon l'une quelconque des revendications précédentes.

10. Carte à microcircuit comportant un circuit selon la revendication 9.

## Patentansprüche

1. Verfahren zum Konfigurieren einer kontaktlosen Kommunikationsschaltung, die wenigstens zwei Applikationen hostet, die mit unterschiedlichen Kommunikationsprotokollen kompatibel sind, wobei das Verfahren die folgenden Schritte aufweist:
Initialisieren einer Kennung (SAK) eines Kommunikationsprotokolls auf einen ersten Wert;
im Falle eines Fehlers einer Transaktion mit einem proximity coupling device bzw. einer Nahfeld-Kommunikationsvorrichtung, Inkrementieren eines Zählers (F); und
wenn der Zählwert einen Schwellenwert (TH) erreicht, Ändern des Wertes der Kennung auf einen zweiten Wert.

2. Verfahren nach Anspruch 1, wobei der Zähler (F) bei jeder erfolgreichen Transaktion zurückgesetzt wird.

3. Verfahren nach Anspruch 1 oder 2, wobei die Kennung bei jeder Transaktion auf den ersten Wert zurückgesetzt wird.

4. Verfahren nach einem der Ansprüche 1 bis 3, wobei der Wert der Kennung das von der Schaltung akzeptierte Kommunikationsprotokoll bestimmt.

5. Verfahren nach Anspruch 4, wobei die Schaltung gemäß dem ISO 14443-4-Protokoll mit der ersten Kennung und gemäß dem ISO 14443-3-Protokoll mit dem zweiten Kennung kommuniziert.

6. Verfahren nach einem der Ansprüche 1 bis 5, wobei eine erste Applikation eine EMV-Applikation ist.

7. Verfahren nach einem der Ansprüche 1 bis 6, wobei eine zweite Applikation eine MIFARE Classic- oder MIFARE Classic+- Applikation ist.

8. Die Methode eines der Ansprüche 1 bis 7, wobei der Schwellenwert einen Wert im Bereich von 2 bis 10 hat.

9. Kontaktlose Kommunikationsschaltung aufweisend einen Mikroprozessor, der programmiert ist, um das Verfahren nach einem der vorhergehenden Ansprüche zu implementieren.

10. Mikroschaltungskarte aufweisend die Schaltung nach Anspruch 9.

## Claims

1. A method of configuring a contactless communication circuit hosting at least two applications compatible with different communication protocols, comprising the steps of:
initializing an identifier (SAK) of a communication protocol to a first value;
in case of failure of a transaction with a proximity coupling device, incrementing a counter (F); and
when the counter value reaches a threshold (TH), changing the value of the identifier for a second value.

2. The method of claim 1, wherein the counter (F) is reset for each successful transaction.

3. The method of claim 1 or 2, wherein the identifier is reset to the first value for each transaction.

4. The method of any of claims 1 to 3, wherein the value of the identifier conditions the communication protocol accepted by the circuit.

5. The method of claim 4, wherein the circuit communicates according to the ISO 14443-4 protocol with the first identifier and according to the ISO 14443-3 protocol with the second identifier.

6. The method of any of claims 1 to 5, wherein a first application is an EMV application.

7. The method of any of claims 1 to 6, wherein a second application is a MIFARE Classic or MIFARE Classic+ application.

8. The method of any of claims 1 to 7, wherein the threshold has a value in the range from 2 to 10.

9. A contactless communication circuit comprising a microprocessor programmed to implement the method of any of the foregoing claims.

10. A microcircuit card comprising the circuit of claim 9.
